# EUROPEAN PATENT SPECIFICATION

(11) **EP 2 691 441 B1**
(45) Date of publication and mention of the grant of the patent: **06.05.2020**
(21) Application number: 12763356.8
(22) Date of filing: 01.03.2012
(51) Int. Cl.: C08G 69/26, C08G 69/40, C08L 77/06

(54) **POLYAMIDE COMPOUND AND MOLDED ARTICLE THEREOF**
POLYAMIDVERBINDUNG UND DARAUS GEFORMTER GEGENSTAND
COMPOSÉ POLYAMIDE ET ARTICLE MOULÉ LE CONTENANT

(30) Priority: 28.03.2011 JP 2011069660; 03.10.2011 JP 2011219084
(43) Date of publication of application: 05.02.2014
(73) Proprietor: Canon Kabushiki Kaisha, Tokyo 146-8501 (JP)
(72) Inventor: YUTAKA, Kie, Tokyo 146-8501 (JP); MIURA, Toshinari, Tokyo 146-8501 (JP); MATSUDA, Katsuhiro, Tokyo 146-8501 (JP); KOMURO, Takeshi, Tokyo 146-8501 (JP)
(74) Representative: WESER & Kollegen Patentanwälte PartmbB
(86) International application number: PCT/JP2012/055737
(87) International publication number: WO 2012/132792

(56) References cited:
- JP-A- 5 178 971
- JP-A- 2009 001 630
- JP-A- 2009 298 753
- JP-A- 2009 298 753
- US-A- 4 129 559
- US-A- 5 420 231
- HEERTJES P M ET AL: "Polycondensation products of 2,5-furandicarboxylic acid", DELFT PROGRESS REPORT, SERIES A: CHEMISTRY AND PHYSICS, CHEMICAL AND PHYSICAL ENGINEERING,, vol. 1, no. 2, 1 January 1974 (1974-01-01) , pages 59-63, XP009178421,
- FEHRENBACHER U ET AL: "Synthese und Charakterisirerung von Polyestern une Polyamidees auf der Basis von Furan-2,5-dicarbonsäure", CHEMIE INGENIEUR TECHNIK, WILEY VCH. VERLAG, WEINHEIM; DE, vol. 81, no. 11, 1 November 2009 (2009-11-01), pages 1829-1835, XP002671544, ISSN: 0009-286X, DOI: 10.1002/CITE.200900090 [retrieved on 2009-10-28]
- Alex Krieger: "Über Polyamide aus heterozyklischen Dicarbonsauren, PROMOTIONS ARBEIT", EIDGENÖSSISCHEN TECHNISCHEN HOCHSCHULE IN ZÜRICH, 1 January 1961 (1961-01-01), pages 1-81, XP055122728, Zürich Retrieved from the Internet: URL:https://www.ethz.ch/de.html [retrieved on 2014-06-11]
- S Gharbi ET AL: "Polyamides incorporating furan moieties. 1. Interfacial polycondensation of 2,29-bis(5-chloroformyl-2-furyl)propane with 1,6-diaminohexane", , 18 August 1999 (1999-08-18), XP055263878, Retrieved from the Internet: URL:http://onlinelibrary.wiley.com/store/1 0.1002/(SICI)1521-4044(19990801)50:8<293:: AID-APOL293>3.0.CO;2-I/asset/293_ftp.pdf?v =1&t=imrp6pm2&s=fb738b29013e712d788682532c 7a61a42153d8bc [retrieved on 2016-04-08]

## Description

### Technical Field

The present invention relates to a polyamide compound and a molded article thereof.

### Background Art

In recent years, there are growing expectations for plastics derived from a plant as a raw material (hereinafter, referred to as bioplastics), which are important for shift to an environmentally-friendly zero-waste society. The bioplastics are produced from a recyclable resource and enable reduction of consumption of fossil resources and suppression of increase in atmospheric carbon dioxide concentration.

One of the practically available bioplastics is a polylactic acid. The polylactic acid is an aliphatic polyester resin obtained by polymerizing lactic acid obtained by fermentation of starch of corn or the like. In recent years, a resin composition containing the polylactic acid is used as a material for an exterior part of a copier, a personal computer, or a mobile phone. However, the polylactic acid has low heat resistance and low mechanical strength compared with a petroleum-derived aromatic polyester resin such as PET or PC. Therefore, the resin composition cannot be used in the vicinity of a part accompanied by heat generation such as a fixing member in a copier or a laser beam printer.

Accordingly, various proposals have been made to improve the heat resistance and mechanical strength of the bioplastic. As an example, Non Patent Literature 1 proposes a method of synthesizing a wholly aromatic polyamide from a plant-derived furandicarboxylic acid and an aromatic diamine. In addition, Non Patent Literatures 2 and 3 propose methods of synthesizing a polyamide from a furandicarboxylic acid and an aliphatic diamine having four, six, or eight carbon atoms. On the other hand, Non Patent Literature 4 discloses that a polyamide (product name: PA1 1) can be obtained by condensing amino-1 1-undecanoic acid synthesized from castor oil fatty acid methyl ester obtained from castor oil. NLP 5 and 6 relate to the synthesis of 2,5-furan-dicarboxylic acid based polyamides. And PL 1 relates to the effective production of highly pure 2,5-furandicarboxylic acid chloride.

### Citation List

### Non Patent Literature

NPL 1: Polymer Communications, 1985, Vol.26, pp.246-249
NPL 2: Progress in Polymer Science, 1997, Vol.22, No.6, pp.1 238-1 239
NPL 3: Delft Progress Report, 1974, Vol.A1, pp.59-63
NPL 4: Environmentally-friendly engineering plastics, Arkema
NPL 5: CHEMIE INGENIEUR TECHNIK, Vol. 81, No. 11, pp. 1829-1835NPL 6: ACTA POLYM., 1999, Vol. 50, pp. 293-297

### Patent Literature

PL 1: JP 2009-298753

### Summary of Invention

### Technical Problem

However, the wholly aromatic polyamide proposed in Non Patent Literature 1 has a low melting point and hence is difficult to mold. Further, the polyamides proposed in Non Patent Literature 2 and Non Patent Literature 3 are soft and are not expected to have high mechanical strength, and there are no description on a glass transition temperature (Tg) which gives an indication of heat resistance. In addition, the polyamide disclosed in Non Patent Literature 4 has a Tg of 37°C and hence cannot be used as a part in the vicinity of a fixing device required to have a Tg of 160°C or more.

### Solution to Problem

The present invention provides a polyamide compound containing a plant-derived component which has high heat resistance and good moldability. In particular, a polyamide compound according to claim 1 and a molded article according to claim 3 is provided.

The other claims relate to further developments.

### Advantageous Effects of Invention

According to the present invention, the polyamide compound containing a plant-derived component which has high heat resistance and good moldability can be provided.

### Brief Description of Drawing

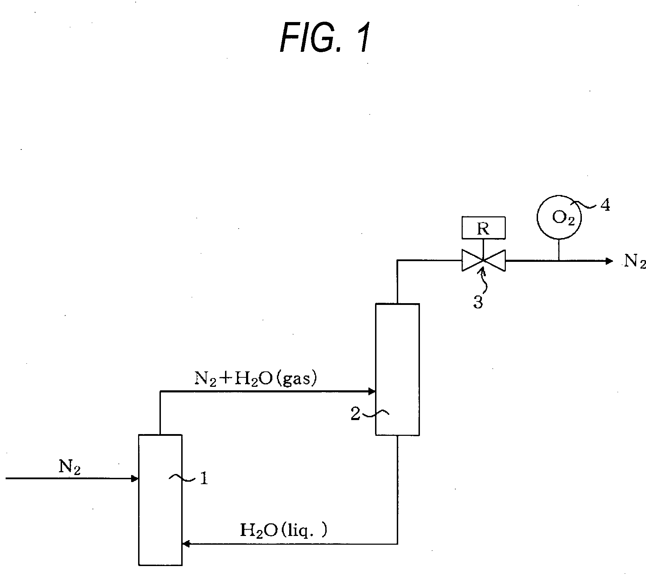

[FIG. 1] FIG. 1 is a schematic diagram of a production apparatus for a polyamide compound used in Comparative Example 1 of the present invention.

### Description of Embodiments

A polyamide compound according to the present invention is represented by the following general formula (1) and has a weight-average molecular weight of 5,000 or more and 200,000 or less and is obtainable by interfacial polymerization from an acid chloride of 2,5-furandicarboxylic acid and ethylenediamine if m represents 2, or 1,3-trimethylenediamine if m represents 3, wherein ethylenediamine or 1,3-trimethylenediamine is used in an amount of 1.1 or more and 1.7 or less equivalents relative to the acid chloride of 2,5-furandicarboxylic acid.

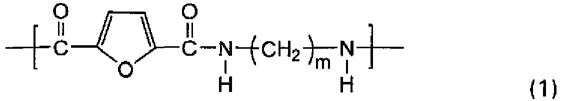

In the formula (1), m represents 2 or 3, and each end of the polymer represented by the formula (1) is one of a hydroxyl group and hydrogen.

In this embodiment, when the weight-average molecular weight of the polyamide compound is adjusted to 5,000 or more, a polyamide compound having excellent heat resistance can be obtained. Note that, in view of facilitating synthesis of the polyamide or facilitating processing of a product, it is desired to adjust the weight-average molecular weight of the polyamide compound obtained as a product to 200,000 or less.

Further, the polyamide compound according to the present invention preferably has a glass transition temperature (Tg) of 160°C or more and 350°C or less. Note that, the Tg tends to increase relatively as the molecular weight of the polyamide compound increases.

The polyamide compound according to the present invention can be obtained by, as represented by the following reaction formula, polycondensation of 2,5-furandicarboxylic acid (hereinafter, sometimes abbreviated as FDCA) or a derivative thereof and ethylenediamine or 1,3-trimethylenediamine.

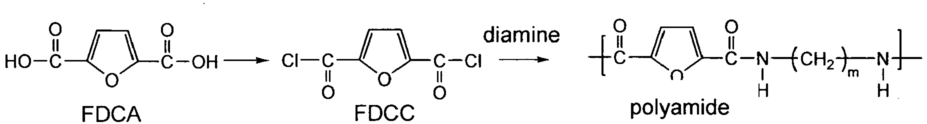

In the formula above, m represents 2 or 3, and each end of the resultant polymer is a hydroxyl group or hydrogen.

In this case, FDCA is a plant-derived monomer obtained by the following processes (A) and (B).
(A) A process for dehydration of a monosaccharide (fructose or glucose) (a process for production of 5-hydroxymethylfurfural (5-HMF)).
(B) A process for oxidation of 5-HMF.

In the above-mentioned process (A), it is desired that a dehydration reaction of the monosaccharide (fructose or glucose) be performed in water or an aprotic dipolar solvent under an acidic catalyst.

A specific method of the above-mentioned process (B) includes air oxidation in the presence of a metal catalyst. Specifically, examples thereof include, but are not limited to, the following methods (B1) and (B2).
(B1) A method involving oxidizing 5-HMF with air in an alkaline aqueous solution under a noble metal catalyst such as platinum.
(B2) A method involving oxidizing 5-HMF with air in an acetic acid solvent in the presence of a complex catalyst such as cobalt, manganese, or bromine under high-pressure and high-temperature conditions.

In synthesis of the polyamide compound according to the present invention, FDCA may be used as it is, but may be converted into a derivative before use. Specific examples of the derivative include an acid chloride of FDCA (FDCC) and an ester derivative of FDCA such as FDCA dimethyl ester or FDCA diethyl ester.

As a polymerization method employed in synthesis of the polyamide compound according to the present invention, a known method may be employed. Examples thereof include interfacial polymerization, solution polymerization, and bulk polymerization. The interfacial polymerization is preferred. Note that, the polymerization method is appropriately selected depending on the type of a molded article. In addition, polymerization conditions of the above-mentioned polymerization methods, that is, polymerization temperatures, polymerization catalysts, and media such as solvents may be appropriately determined depending on the respective polymerization methods.

A synthesis example in the case of the interfacial polymerization is described below. In the case of the interfacial polymerization, the polyamide compound of the present invention is synthesized by the following two steps.
First step: Step of synthesis of FDCC (acid chloride)
Second step: Step of reaction of FDCC with a diamine (ethylene diamine or 1,3-trimethylenediamine)

The first step is a step of converting FDCA into an acid chloride (FDCC) with a chlorinating agent. As the chlorinating agent used in this step, a known one is usually used. Specific examples thereof include thionyl chloride, sulfuryl chloride, phosphoryl chloride, and phosphorus pentachloride, and thionyl chloride is preferred because the compound can be easily removed in a post-treatment step after the reaction.

In the first step, the chlorinating agent is used desirably in an amount of 2 equivalents or more relative to FDCA. If the amount is less than 2 equivalents, the carboxylic acid remains after the chlorination reaction, which may cause synthesis of small polymers each having a molecular weight of less than 5,000 in the next step (polycondensation step).

Further, the chlorination reaction is preferably performed at a temperature equal to or lower than the boiling point of the chlorinating agent. For example, in the case where thionyl chloride is used as the chlorinating agent, the reaction is preferably performed at a temperature ranging from 50°C to 85°C. In addition, usually, the reaction time of the chlorination reaction is desirably about 30 minutes to 5 hours. If the reaction time is less than 30 minutes, the chlorination reaction is insufficiently performed.

The above-mentioned chlorination reaction is usually performed using no solvent, but may be performed in a solvent as long as the solvent is inactive to the chlorination reaction and has a boiling point higher than the reaction temperature. Further, the chlorination reaction is preferably performed in an inert gas atmosphere at ordinary pressure, but may be performed in an air atmosphere or under reduced or increased pressure.

In addition, usually, the chlorination reaction can progress even with no catalyst, but if necessary, a known catalyst may be added. For example, in the case where thionyl chloride is used as the chlorinating agent, dimethylformamide is added preferably in an amount ranging from 0.001 equivalents to 0.5 equivalents relative to FDCA.

As described above, FDCC synthesized by the chlorination reaction is usually purified by a known method and used in the next step (polycondensation step).

Next, the second step (polycondensation by interfacial polymerization) is described. The diamine used in this second step (ethylenediamine or 1,3-trimethylenediamine) is used in an amount of 1 equivalent or more relative to FDCC, and is used particularly preferably in an amount ranging from 1.1 equivalents to 1.7 equivalents. In the case where the diamine is present sufficiently relative to FDCC, there is no effect on the polycondensation reaction. However, in the case where the diamine is used in an amount of less than 1 equivalent, FDCC or a derivative thereof remains after the polycondensation reaction and causes deterioration of physical properties of the polyamide compound obtained as a product.

Meanwhile, in the case where the interfacial polymerization is employed, an aqueous layer is prepared by dissolving the diamine in water or an aqueous solution, and an organic layer is prepared by dissolving FDCC in a water-immiscible organic solvent. In this case, the organic solvent used for dissolving FDCC is preferably chloroform. The polycondensation reaction is preferably performed at ordinary temperature. Specifically, the reaction is performed by adding the organic layer to a reactor and then pouring the aqueous layer to the reactor to initiate the reaction (interfacial polymerization reaction). Note that, in this embodiment, the reaction is more preferably performed by adding the aqueous layer to a reactor and then pouring the organic layer to the reactor to initiate the reaction. In addition, specific examples of the reaction operation technique after pouring preferably include a stationary method and an agitation method, and an appropriate technique is selected from the methods. In the case where the reaction is performed by the stationary method, a polymer product generated on the interface is drawn to generate another polymer product on the interface, thereby producing a fibrous (cord-like) product. The reaction container used in the case of the stationary method is preferably one having so large reaction area that a polymer product membrane generated on the interface is not broken by the weight of the membrane. Further, in drawing of the polymer product, the polymer product on the interface is drawn using an automatic winder whose speed is set to a constant speed (for example, a bar with a diameter of 8 mm is rotated at a rotating speed of 60 rpm) until no polymer product on the interface remains. In addition, in the case of the stationary method, the reaction time of the polycondensation reaction is about 1 hour to 6 hours.

Meanwhile, in the case where the agitation method is employed, the interface between the aqueous layer and the organic layer becomes larger by agitation, and the reaction can be performed rapidly compared with the stationary method. Specifically, the reaction can be performed at a reaction time ranging from about 30 minutes to 2 hours. Note that, in the case where the reaction time is less than 30 minutes, the polycondensation reaction is performed insufficiently. As the reaction container used in the agitation method, a container appropriate for the amount of a liquid to be added is preferably selected.

The inventors of the present invention have considered that the reason why a conventional polyamide which is a bioplastic (such as PA11) has a low Tg is because amide bonds in the resultant polyamide have a low density due to a long carbon chain contained in an aminoalkylene carboxylic acid. In this embodiment, the amide bond (-C(=O)-NH-) content in the resultant polyamide can be increased by using aliphatic diamines having two and three carbon atoms.

As described above, the polyamide compound according to the present invention is a bioplastic having high heat resistance and good moldability. Therefore, a molded article obtained by molding the polyamide compound according to the present invention can be used as interior and exterior parts for a copier or a printer. Specifically, the molded article can be preferably used as a part such as a paper feed guide in the vicinity of a fixing member in a laser beam printer and an exterior part thereof. Further, the molded article is preferably used as a machine part or an automotive part such as a bearing, a bush, or a gear which are required to have abrasion resistance, or a tube required to have toughness and chemical resistance.

In addition, the polyamide compound according to the present invention is a plant-derived polyamide obtained by using a plant-derived monomer FDCA as one of its raw materials. On the other hand, an aliphatic diamine such as ethylenediamine or 1,3-propylenediamine is produced from petroleum. Therefore, as the carbon chain of the aliphatic diamine becomes shorter, the plant degree (use rate of a plant-derived raw material) of the polyamide compound becomes higher. Further, as the plant degree of the polyamide compound becomes higher, the amount of CO₂ emission in incineration becomes smaller.

### Examples

### Measurement and analysis conditions

Measurement and analysis conditions for polyamide compounds synthesized in the following Examples and Comparative Examples are shown below.
(1) GPC analysis
   Sample concentration: 0.2%
   Analyzer: Alliance 2695 manufactured by Waters Corporation
   Detector: Differential refractive index detector manufactured by Wyatt Co.
   Eluent: 5 mM sodium trifluoroacetate in HFIP
   Flow rate: 1.0 ml/min
   Column: Shodex GPC HFIP-806M×2+HFIP-803×1
   Column temperature: 25°C
   Calibration curve: PMMA calibration
(2) Glass transition temperature (Tg) measurement Apparatus name: Differential scanning calorimeter (DSC) manufactured by TA Instruments Co.
   Pan: Aluminum pan
   Sample weight: 2 mg to 3 mg
   Heating starting temperature: 30°C
   Heating rate: 1st; 10°C/min, 2nd; 5°C/min
   Atmosphere: Nitrogen
(3) Thermal decomposition temperature (Td) measurement ^{(Note 1)}
   Apparatus name: thermogravimetric analyzer (TGA) manufactured by TA Instruments Co.
   Pan: Platinum pan
   Sample weight: 3 mg
   Heating starting temperature: 30°C
   Measurement mode: Dynamic rate method^{(Note 2)}
   Atmosphere: Nitrogen
      (Note 1) A temperature at which a reduction in weight by 10% was observed was defined as T_{d}.
      (Note 2) A measurement mode of improving resolution by controlling heating rate depending on the degree of a change in weight
(4) ¹H-NMR
   Apparatus: Nuclear magnetic resonance apparatus manufactured by JEOL Co. Ltd.
   Solvent: CF₃COOD
(5) FT-IR
   Apparatus name: Fourier transform infrared spectrophotometer manufactured by Perkin-Elmer Co., Ltd.
   Measurement resolution: 4 cm⁻¹
   Number of scans: 20
   Measurement wavenumber range: 4,000 cm⁻¹ or 400 cm⁻¹

### Example 1

Synthesis of poly(ethylene-2,5-furandicarbonamide) Poly(ethylene-2,5-furandicarbonamide) was synthesized according to the following synthesis scheme.

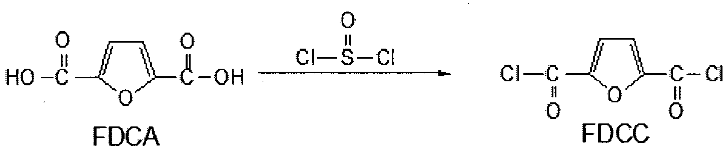

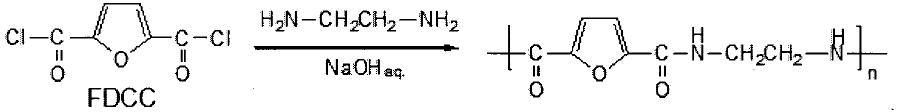

Note that, the end of the resultant polymer is a hydroxyl group or hydrogen.

### (1) Synthesis of FDCC

The following reagents and solvent were charged to a 50-mL three-necked flask equipped with a nitrogen inlet pipe, a cooling pipe, a thermometer, and a stirring blade
FDCA (in-house product): 15.6 g (100 mmol)
Thionyl chloride (manufactured by Kishida Chemical Co., Ltd.): 30.6 ml (400 mmol)
Dimethylformamide (manufactured by Kishida Chemical Co., Ltd.): 0.741 ml (9.57 mmol)

Next, stirring was started while feeding nitrogen into the three-necked flask and the three-necked flask was immersed in an oil bath adjusted to 85°C. This state was maintained for about 2 hours. Subsequently, the temperature of the oil bath was set to 40°C, and the pressure was reduced to 20 kPa or less. After that, the pressure reduction was continued until no distillate was produced, and the pressure was returned to ordinary pressure. Then, the reaction solution was cooled to room temperature. Next, hexane (1 L) was charged to the three-necked flask to dissolve the reaction product. Subsequently, the hexane solution where the reaction product was dissolved was cooled to -20°C to precipitate needle crystals followed by filtration. As a result, 8.03 g of an FDCA chloride (FDCC) was obtained (yield 41.6 mol%).

### (2) Synthesis of polyamide compound

First, a 200 ml-beaker (for aqueous layer), a 100 ml-conical beaker (for organic layer), and an automatically rotating bar for drawing polymer product were prepared.

Next, the following reagent and solvent were charged to the 100 ml-conical beaker, and the solution was stirred until the following FDCC was dissolved using a magnetic stirrer, to thereby prepare an organic layer solution.
FDCC (obtained in the process (1) above): 1.16 g (6.01 mmol)
Chloroform (manufactured by Kishida Chemical Co., Ltd., dehydrated with magnesium sulfate before use): 50 ml

Subsequently, the following reagent and solvents were charged to the 200 ml-beaker, and the solution was stirred using a glass bar until the solution became uniform, to thereby prepare an aqueous layer solution. Sodium hydroxide (manufactured by Kishida Chemical Co., Ltd.): 0.502 g (12.6 mmol)
Distilled water: 50 ml
Ethylenediamine (manufactured by Kishida Chemical Co., Ltd.): 0.496 ml (7.33 mmol)

Next, the organic layer solution was charged to the beaker for aqueous layer. In this procedure, the organic layer was poured rapidly so as not to cause bubbling in the aqueous layer solution in the beaker for aqueous solution. After that, a polymer product generated on the interface between the aqueous layer and the organic layer was pulled up using a pair of tweezers, and the end of the polymer product was attached to the automatically rotating bar. Then, the polymer product was twisted around the automatically rotating bar with a diameter of 8 mm at a rotating speed of 60 rpm. The reaction was performed for about 1 hour while the speed was kept until the reaction on the interface was completed, to thereby obtain a polymer product. Next, after completion of the reaction performed by the stationary method, a magnetic stirrer was placed in the residual reaction solution, and the solution was stirred at a rotating speed of 1,000 rpm to generate a polymer product, followed by collection of the polymer product. Then, the generated polymer product was washed well with acetone and dried under reduced pressure drying conditions at 130°C for 1 day. After drying, 0.861 g of the polymer product was obtained (yield 79.5 mol%).

Poly(ethylene-2,5-furandicarbonamide) obtained in Example 1 was found to have a weight-average molecular weight of 51,000 and a Tg of 206°C.

In addition, for the resultant polymer, FT-IR spectrum measurement was performed, and the following absorptions were observed:
around 3,300 cm⁻¹ (N-H stretching vibration); around 3,000 cm⁻¹ (aliphatic C-H stretching vibration); 1,639 cm⁻¹ (C=O stretching vibration); 1,572 cm⁻¹ (N-H bending vibration); and 1,286 cm⁻¹ (interaction of N-H bending vibration and C-N stretching).

The above-mentioned infrared absorptions show that the polymer obtained in Example 1 is a polyamide.

On the other hand, for the resultant polymer, ¹H-NMR spectrum measurement was performed, and the following peaks were observed. Note that, the N-H proton could not be detected because of overlapping with a solvent peak (δ=11.6 ppm). In addition, the following (a) and (b) correspond to hydrogen atoms represented by (a) and (b), respectively, in the following partial structural formula.
δ=3.85 ppm (b), δ=7.28 ppm (a)

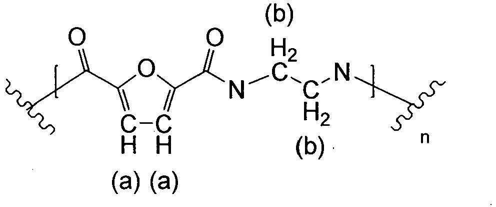

The results of the FT-IR measurement and the integration ratio of peaks of ¹H-NMR spectra (a:b=1:2) show that the polymer obtained in Example 1 is poly(ethylene-2,5-furandicarbonamide) .

### Comparative Example 1

Poly(ethylene-2,5-furandicarbonamide) was synthesized according to the following synthesis scheme.

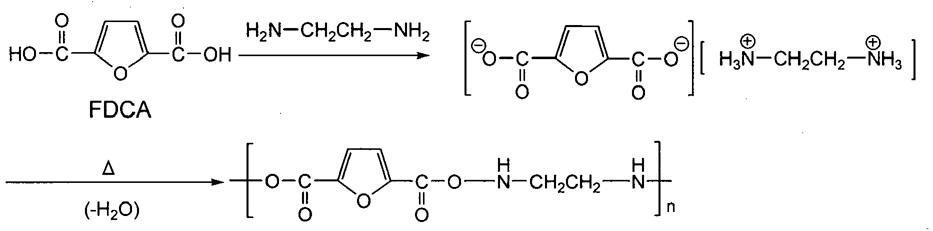

Note that, the end of the resultant polymer is a hydroxyl group or hydrogen.

### (1) Synthesis of nylon salt

The following reagent and solvents were charged to a 300-ml beaker.
FDCA (in-house product): 31.2 g (199 mmol)
Ethylenediamine: (manufactured by Kishida Chemical Co.,
Ltd.): 12.3 g (199 mmol)
Distilled water: 160 ml

Next, the beaker was heated to raise the temperature of the reaction solution to 60°C, and the reaction solution was stirred using a magnetic stirrer at this temperature (60°C) for 1 hour. Subsequently, the reaction solution was returned to room temperature, and activated carbon (Shirasagi A (manufactured by Japan Enviro Chemicals, Co. Ltd.); 3.01 g) was charged to the reaction solution, followed by stirring of the reaction solution for 1 hour. Then, the reaction solution was filtered, and the residue was washed well with distilled water. After that, the solution obtained after filtration was poured slowly into ethanol (manufactured by Kishida Chemical Co., Ltd.; 350 ml) to reprecipitate a nylon salt.

### (2) Synthesis of polyamide compound

Next, a polyamide was synthesized using a reaction apparatus illustrated in FIG. 1. Note that, the reaction apparatus illustrated in FIG. 1 includes a reaction container 1, a cooling condenser 2 connected to the reaction container 1, and a pressure exhaust valve 3 for adjusting the pressure in the reaction container 1. In addition, the reaction apparatus illustrated in FIG. 1 is provided with a nitrogen line for feeding nitrogen to the reaction container 1. On the nitrogen line, an oxymeter 4 for measuring an oxygen concentration in nitrogen passing through the pressure exhaust valve 3 is provided.

First, the following reagent and solvent were charged to the reaction container 1 equipped with a stirring machine (not shown).
Nylon salt (obtained in the process (1) above): 17.8 g (82.3 mmol)
Distilled water: 7.6 ml (30 wt%)

Next, stirring of the reaction mixture was started at a rotating speed of 30 rpm while the reaction container 1 was filled with nitrogen. Then, the temperature in the reaction container was raised to 190°C, and the pressure in the reaction container was raised to 1.3 MPa. Further, stirring of the reaction mixture was performed for 5 hours while this state was maintained.

Next, a brown oligomer of a viscous solution was taken out from the reaction container 1 and transferred to a 100-ml eggplant flask, and the temperature of the oligomer was raised over 5 hours to a temperature ranging from 210°C to 240°C while stirring using a mechanical stirrer. After completion of the reaction, the generated oligomer was taken out using a dropper.

Subsequently, the resultant oligomer was transferred to a 100-ml eggplant flask and then stirred using a mechanical stirrer (at a rotating speed of 30 rpm) in an oil bath heated to 210°C while heating the eggplant flask under reduced pressure. Note that, in heating of the eggplant flask, the solution was allowed to react at different temperatures (210°C, 220°C, 230°C, and 240°C) each for 1 hour while raising the temperature from 210°C to 240°C at an increment of 10°C. Note that, the reaction was completed when it became difficult to stir the content in the eggplant flask due to its raised viscosity. After completion of the reaction, an HFIP solution was added to the eggplant flask to dissolve solid matter generated in the eggplant flask, and the resultant solution was poured to a beaker containing distilled water (300 ml) to reprecipitate it, to thereby collect a polymer generated.

Meanwhile, for the resultant polymer, measurement was performed in the same way as in Example 1, and the polymer was found to have a weight-average molecular weight of 3,700 and a Tg of 159°C.

### Example 2

Synthesis of poly(propylene-2,5-furandicarbonamide) Poly(propylene-2,5-furandicarbonamide) was synthesized according to the following synthesis scheme.

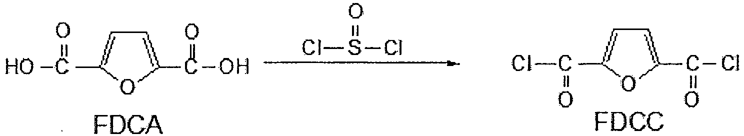

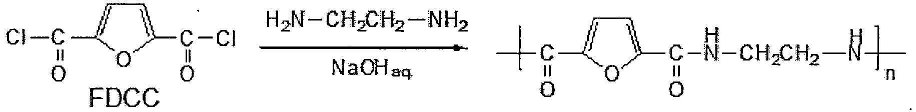

Note that, the end of the resultant polymer is a hydroxyl group or hydrogen.

The same procedure as in Example 1 was repeated except that 1,3-trimethylenediamine (0.611 ml, 7.33 mmol) was used instead of ethylenediamine used in '(2)' of Example 1, to thereby obtain 0.957 g (82.0 mol%) of poly(propylene-2, 5-furandicarbonamide).

In addition, for the resultant polymer, measurement was performed in the same way as in Example 1, and the polymer was found to have a weight-average molecular weight of 31,000 and a Tg of 179°C.

Further, for the polymer obtained in Example 2, FT-IR spectrum measurement was performed, and the following absorptions were observed:
Around 3,300 cm⁻¹ (N-H stretching vibration); around 3,000 cm⁻¹ (aliphatic C-H stretching vibration); 1,639 cm⁻¹ (C=O stretching vibration); 1,575 cm⁻¹ (N-H bending vibration); and 1,283 cm⁻¹ (interaction of N-H bending vibration and C-N stretching)
The above-mentioned infrared absorptions show that the polymer obtained in Example 2 is a polyamide.

On the other hand, for the resultant polymer, ¹H-NMR spectrum measurement was performed, and the following peaks were observed. Note that, the N-H proton could not be detected because of overlapping with a solvent peak (δ = 11.6 ppm). In addition, the following (a) to (c) correspond to hydrogen atoms represented by (a), (b), and (c), respectively, in the following partial structural formula.
5=2.08 ppm (c), δ=3.67 ppm (b), δ=7.35 ppm (a)

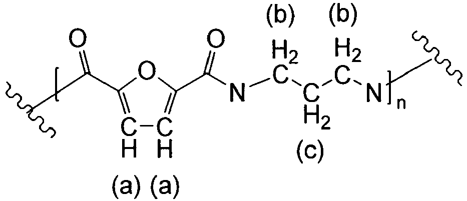

The results of the FT-IR measurement and the integration ratio of peaks of ¹H-NMR spectra (a:b:c=1:2:1) show that the polymer obtained in Example 2 is poly(propylene-2,5-furandicarbonamide).

### Comparative Example 2

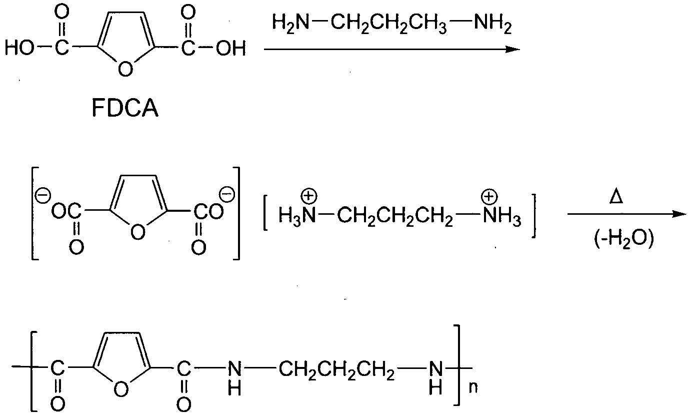

The end of the resultant polymer is a hydroxyl group or hydrogen.

The same procedure as in Comparative Example 1 was repeated except that 1,3-diaminopropane (15 g, 0.2 mol) was used instead of ethylenediamine used in Comparative Example 1, to thereby obtain poly(propylene-2,5-furandicarbonamide).

For the resultant polymer, measurement was performed in the same way as in Example 1, and the polymer was found to have a weight-average molecular weight of 3,200 and a Tg of 150°C.

Table 1 below shows the results of Examples and Comparative Examples.

**[Table 1]**

| | Polymer | Molecular weight (Weight-average molecular weight) | Tg [°C] |
|---|---|---|---|
| Example 1 | Poly(ethylene-2,5-furandicarbonamide) | 51,000 | 206 |
| Comparative Example 1 | Poly(ethylene-2,5-furandicarbonamide) | 3,700 | 159 |
| Example 2 | Poly(propylene-2,5-furandicarbonamide) | 31,000 | 179 |
| Comparative Example 2 | Poly(propylene-2,5-furandicarbonamide) | 3,200 | 150 |

### Reference Signs List

1: reaction container
2: cooling condenser
3: pressure exhaust valve
4: oxymeter

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application Nos. 2011-069660, filed March 28, 2011, and 2011-219084, filed October 3, 2011, which can be used as further references.

## Claims

1. A polyamide compound of the following general formula (1) having a weight-average molecular weight of 5,000 or more and 200,000 or less as measurable by GPC analysis, in which a sample concentration of 0.2%, 5 mM sodium trifluoroacetate in HFIP as an eluent, a flow rate of 1.0 ml/min, Shodex GPC HFIP-806M × 2 + HFIP-803 × 1 as a column, a column temperature of 25°C, and PMMA calibration as a calibration curve are employed: 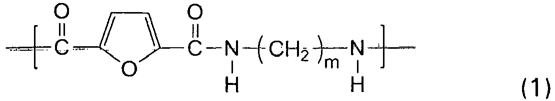
wherein, in the formula (1), m represents 2 or 3, and each end of the polymer is one of a hydroxyl group and hydrogen, and
wherein the polyamide compound is obtainable by interfacial polymerization from an acid chloride of 2,5-furandicarboxylic acid and ethylenediamine if m represents 2, or 1,3-trimethylenediamine if m represents 3, wherein ethylenediamine or 1,3-trimethylenediamine is used in an amount of 1.1 or more and 1.7 or less equivalents relative to the acid chloride of 2,5-furandicarboxylic acid.

2. The polyamide compound according to claim 1, which has a glass transition temperature of 160°C or more and 350°C or less.

3. A molded article, which is obtained by molding a polyamide compound according to claim 1 or 2.

4. A molded article according to claim 3, which is used as interior and exterior parts for one of a copier and a printer.

## Patentansprüche

1. Polyamidverbindung nach der folgenden allgemeinen Formel (1) mit einem gewichtsgemittelten Molekulargewicht von 5.000 oder mehr und 200.000 oder weniger, messbar mittels GPC-Analyse, in welcher eine Probenkonzentration von 0,2%, 5 mM Natriumtrifluoracetat in HFIP als ein Eluent, eine Strömungsgeschwindigkeit von 1,0 ml/min, Shodex GPC HFIP-806M x 2 + HFIP-803 x 1 als eine Säule, eine Säulentemperatur von 25°C, und PMMA-Kalibrierung als Kalibrierungskurve verwendet werden: 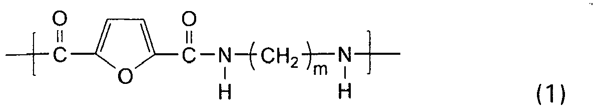
wobei in der Formel (1) m 2 oder 3 darstellt und ein jeweiliges Ende des Polymers entweder eine Hydroxylgruppe oder Wasserstoff ist, und
wobei die Polyamidzusammensetzung erhalten werden kann durch Grenzflächenpolymerisierung aus einem Säurechlorid von 2,5-Furandicarboxylsäure und Ethylendiamin, falls m 2 darstellt, oder 1,3-Trimethylendiamin, falls m3 darstellt, wobei Ethylendiamin oder 1,3-Trimethylendiamin in einer Menge des 1,1-Fachen oder mehr und des 1,7-Fachen oder weniger Äquivalenten bezogen auf das Säurechlorid von 2,5-Furandicarboxylsäure verwendet wird.

2. Polyamidverbindung nach Anspruch 1, welche eine Glasübergangstemperatur von 160°C oder mehr und 350°C oder weniger aufweist.

3. Geformter Artikel, welcher durch Formen einer Polyamidverbindung nach Anspruch 1 oder 2 erhalten wird.

4. Geformter Artikel nach Anspruch 3, welcher als innere und äußere Bauteile für einen Kopierer oder einen Drucker verwendet wird.

## Revendications

1. Composé polyamide de formule générale (1) suivante ayant un poids moléculaire moyen en poids supérieur ou égal à 5000 et inférieur ou égal à 200 000, mesurable par une analyse GPC, dans laquelle on utilise une concentration en échantillon de 0,2 %, 5 mM de trifluoro-acétate de sodium dans du HFIP en tant qu'éluant, un débit de 1,0 ml/min, du Shodex GPC HFIP-806M x 2 + HFIP-803 x 1 en tant que colonne, une température de colonne de 25°C, et une courbe d'étalonnage PMMA en tant que courbe d'étalonnage : 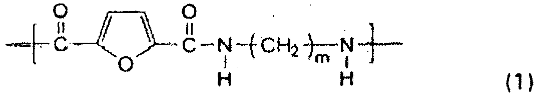
dans lequel, dans la formule (1), m représente 2 ou 3, et chaque extrémité du polymère est l'un d'un groupe hydroxyle et d'un hydrogène, et
le composé de polyamide pouvant être obtenu par polymérisation interfaciale à partir d'un chlorure acide d'acide 2,5-furane-dicarboxylique et d'éthylènediamine si m représente 2, ou de 1,3-triméthylènediamine si m représente 3, dans lequel l'éthylènediamine ou la 1,3-triméthylènediamine est utilisée en une quantité supérieure ou égale à 1,1 et inférieure ou égale à 1,7 équivalents par rapport au chlorure acide de l'acide 2,5-furane-dicarboxylique.

2. Composé de polyamide selon la revendication 1, qui présente une température de transition vitreuse supérieure ou égale à 160°C et inférieure ou égale à 350°C.

3. Article moulé, qui est obtenu par moulage d'un composé de polyamide selon la revendication 1 ou 2.

4. Article moulé selon la revendication 3, qui est utilisé sous la forme de parties intérieures et extérieures pour un copieur et une imprimante.
